# EUROPÄISCHE PATENTSCHRIFT

(11) **EP 3 744 497 B1**
(45) Veröffentlichungstag und Bekanntmachung des Hinweises auf die Patenterteilung: **15.06.2022**
(21) Anmeldenummer: 19176845.6
(22) Anmeldetag: 27.05.2019
(51) Int. Cl.: B29C 45/16, B29C 45/26, B29C 45/06, B29C 33/76, B29C 33/20

(54) **MEHRKOMPONENTEN-SPRITZGIESSWERKZEUG**
MULTICOMPONENT INJECTION MOULDING TOOL
OUTIL DE MOULAGE PAR INJECTION À PLUSIEURS COMPOSANTS

(43) Veröffentlichungstag der Anmeldung: 02.12.2020
(73) Patentinhaber: Haidlmair Holding GmbH, 4542 Nussbach (AT)
(72) Erfinder: PICHLER, Andreas, 4565 Inzersdorf (AT)
(74) Vertreter: Jell, Friedrich

(56) Entgegenhaltungen:
- EP-A1- 1 293 321
- DE-A1- 4 224 171
- DE-A1- 19 536 759
- DE-A1-102004 003 464
- DE-A1-102005 017 222
- DE-A1-102008 005 944
- US-A1- 2008 191 388

## Beschreibung

Die Erfindung betrifft ein Mehrkomponenten-Spritzgießwerkzeug zur Herstellung eines Spritzteils nach der Drehtechnik, mit wenigstens zwei auseinander und wieder zusammenfahrbaren Formhälften, von denen eine erste Formhälfte stehend und eine zweite Formhälfte beweglich ist, und mit zumindest zwei, sich zwischen den Formhälften ausbildenden Formkavitäten, wovon eine erste Formkavität zum Formen eines Vorspritzteils aus einer ersten Komponente und eine zweite Formkavität zum Formen des Spritzteils, umfassend das Vorspritzteil und eine zweite Komponente, ausgebildet sind, wobei die zweite Formhälfte einen die erste Formkavität begrenzenden Formeinsatz zur Erzeugung einer Stoßfläche am Vorspritzteil aufweist.

Um an einem Vorspritzteil eine vordefinierte Stoßfläche zu erzeugen, an der eine zweite Komponente, eingespritzt in eine zweite Formkavität, exakt anschließen kann, ist es bekannt (DE 10 2014 014 388 B3), in der ersten Formkavität einen Formeinsatz vorzusehen, der an der beweglichen Formhälfte vorgesehen ist.

Bei einem Mehrkomponenten-Spritzgießwerkzeug zur Herstellung eines Spritzteils nach der Drehtechnik ist jedoch ein Formeinsatz nur dann anwendbar, wenn beispielsweise über ein Indexplattenverfahren der Vorspritzteil in die zweite Formkavität eingebracht wird. Denn nur so kann der Formeinsatz der ersten Formkavität zugeordnet bleiben, was bei einem Drehtellerverfahren, bei dem ein Drehteller mit dem Vorspritzteil gedreht wird, nicht der Fall ist.

Bei Mehrkomponenten-Spritzgießwerkzeugen, welche nach dem Drehtellerverfahren arbeiten (vgl. EP2860010A1), können daher oftmals geometrisch aufwendige Spritzgussteile mit mehreren Komponenten nicht verwendet werden. Zudem sind Mehrkomponenten-Spritzgießwerkzeuge, die nach dem Indexplattenverfahren arbeiten, konstruktiv vergleichsweise aufwendig.

Die Erfindung hat sich daher die Aufgabe gestellt, ein Mehrkomponenten-Spritzgießwerkzeug zur Herstellung eines Spritzteils derart zu verändern, dass selbst bei Anwendung des Drehtellerverfahrens geometrisch aufwendige Spritzgussteile standfest erzeugt können. Zudem soll das Mehrkomponenten-Spritzgießwerkzeug in seiner Konstruktion vereinfacht werden und eine hohe Standfestigkeit aufweisen können.

Die Erfindung löst die gestellte Aufgabe durch die Merkmale des Anspruchs 1.

Indem die zweite Formhälfte ein Drehteller mit dem Formeneinsatz aufweist, ist es zunächst möglichst, die Konstruktion des Mehrkomponenten-Spritzgießwerkzeugs beispielsweise hinsichtlich beweglicher Teile zu reduzieren - was die Konstruktion erheblich vereinfachen und auch die Standfestigkeit erhöhen kann. Dies aber nicht unter verminderter Qualität am Spritzteil, da der Formeinsatz als beweglicher Schieber ausgebildet ist, um in seiner ersten Lage an der ersten Formkavität diese zur Erzeugung einer Stoßfläche am Vorspritzteil zu begrenzen und in seiner zweiten Lage an der zweiten Formkavität diese zur Stoßfläche am Vorspritzteil hin zu erweitern. Durch diese bewegliche Ausgestaltung des Formeinsatzes kann sohin die Stoßfläche am Vorspritzteil freigegeben werden, was einen exakten Anschluss der zweiten Komponente ermöglicht - dies selbst bei aufwendigen Konturen des Spritzteils. Im Gegensatz zum Stand der Technik können daher selbst solche Spritzteile mit einem Mehrkomponenten-Spritzgießwerkzeug zur Durchführung des Drehtellerverfahren standfest und formgenau erzeugt werden.

Vorzugsweise ist der Formeinsatz quer zur Schließ- bzw. Öffnungsrichtung des Mehrkomponenten-Spritzgießwerkzeugs beweglich gelagert, um am Drehteller ausreichend Bauraum für positionsgenaue Führungselemente des Formeinsatzes zur Verfügung zu haben. Damit ist die Formgenauigkeit am Spritzteil noch weiter erhöhbar.

Weist das Drehteller ein verschiebbares Spannelement auf, welches neben dem beweglichen Formeinsatz angeordnet und in Richtung des Vorspritzteils zu dessen Einspannung verlagerbar ausgebildet ist, kann im Bereich des Formeinsatzes eine standfeste Abdichtung der zweiten Formkavität ermöglicht werden. Zudem kann diese Abdichtung ein Überspritzen des Vorspritzteils verhindern, da sich beispielsweise durch ein Schwinden des Vorspritzteils ein Spalt ergeben kann. Die Formgenauigkeit des Spritzteils ist dadurch zusätzlich erhöhbar.

Ist das Spannelement in Schließrichtung des Mehrkomponenten-Spritzgießwerkzeugs beweglich gelagert, kann etwa ein Schwinden des Vorspritzteils, besonders gut ausgleichen werden - und damit was die zweite Formkavität standfest abdichtet. Ein Überspritzen des Vorspritzteils mit der zweiten Komponente kann damit vermieden, was eine formgenaue Herstellung selbst bei einem hochkomplexen Spritzteil sicherstellt.

Letztgenanntes ist insbesondere erreichbar, indem der Formeinsatz eine Ausnehmung aufweist, die in der zweiten Lage die zweite Formkavität zur Stoßfläche des Vorspritzteils hin öffnet. Solch eine Ausnehmung kann nämlich auf Basis ihrer Geometrie unabhängig von Führungstoleranzen, welche beispielsweise die Genauigkeit von Mehrkomponenten-Spritzgießwerkzeugen nach dem Kernzugverfahren (Core-Back-Technik) beeinträchtigen, eine exakte Erweiterung der zweiten Formkavität sicherstellen.

Vorzugsweise weist das Drehteller zu jeder Formkavität je mindestens einen Formeinsatz und gegebenenfalls jeweils mindestens ein Spannelement auf, um damit die gleichzeitige Erzeugung von Vorspritzteil und Spritzteil sicherstellen zu können.

Die zweite Formkavität kann an das Vorspritzteil in Längsrichtung anschließen, um die Schmelzfront der zweiten Komponente exakt an die Stoßfläche am Vorspritzteil heranführen zu können. Derart ist die Formgenauigkeit des Spritzteils weiter erhöhbar.

Die Konstruktion des Mehrkomponenten-Spritzgießwerkzeugs kann noch vereinfacht werden, wenn Formeinsatz und Spannelement zu einer Baugruppe an dem Drehteller zusammengefasst sind.

Die Bewegung des Schiebers kann konstruktiv einfach gelöst werden, wenn das Mehrkomponenten-Spritzgießwerkzeug einen Keiltrieb aufweist, der einen an der ersten Formhälfte befestigten Treiber aufweist, welcher Treiber mit dem Schieber zu dessen Bewegung in die erste Lage und/oder in die zweite Lage zusammenwirkt.. Zudem ist ein Keiltrieb vergleichsweise standfest.

Vorzugsweise bewegt der Keiltrieb das Spannelement mithilfe des Schiebers mit, was die Konstruktion noch weiter vereinfachen kann.

Vorzugsweise weist das das Drehteller einen Formkern auf.

In den Figuren ist beispielsweise der Erfindungsgegenstand anhand einer Ausführungsvariante näher dargestellt. Es zeigen
- Fig. 1: eine Draufsicht einer teilweise aufgerissenen zweiten Formhälfte eines Mehrkomponenten-Spritzgießwerkzeugs mit einem Vorspritzteil in einer ersten Formkavität,
- Fig. 2: eine Schnittansicht nach II-II der Fig. 1,
- Fig. 3: eine Draufsicht auf die teilweise aufgerissene zweite Formhälfte des Mehrkomponenten-Spritzgießwerkzeugs nach Fig. 1 mit einem Spritzteil in einer zweiten Formkavität,
- Fig. 4: eine Schnittansicht nach IV-IV der Fig. 3 und
- Fig. 5: eine vergrößerte Detailansicht der Fig. 4.

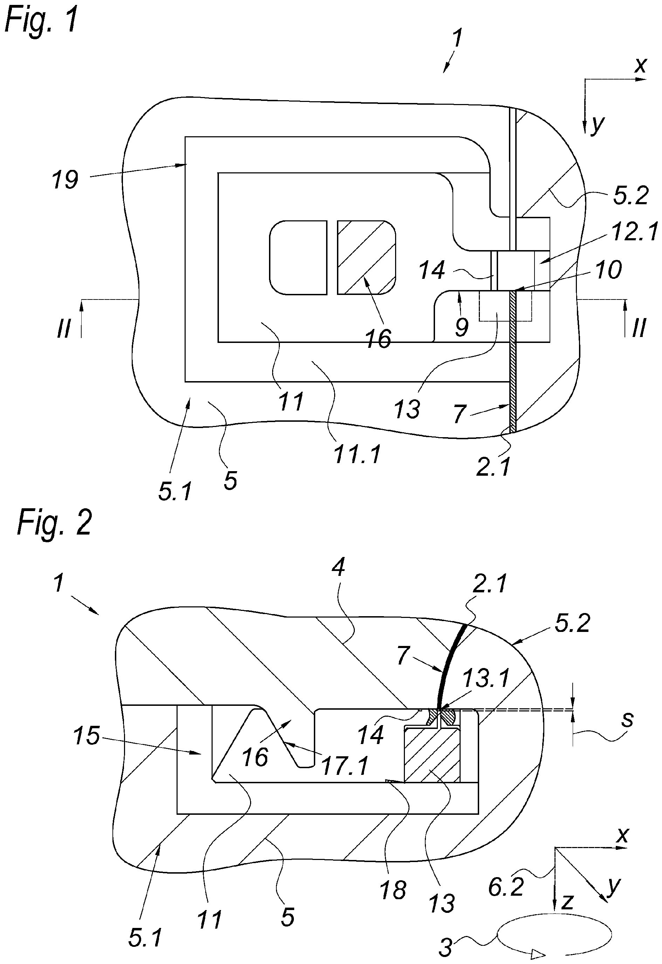

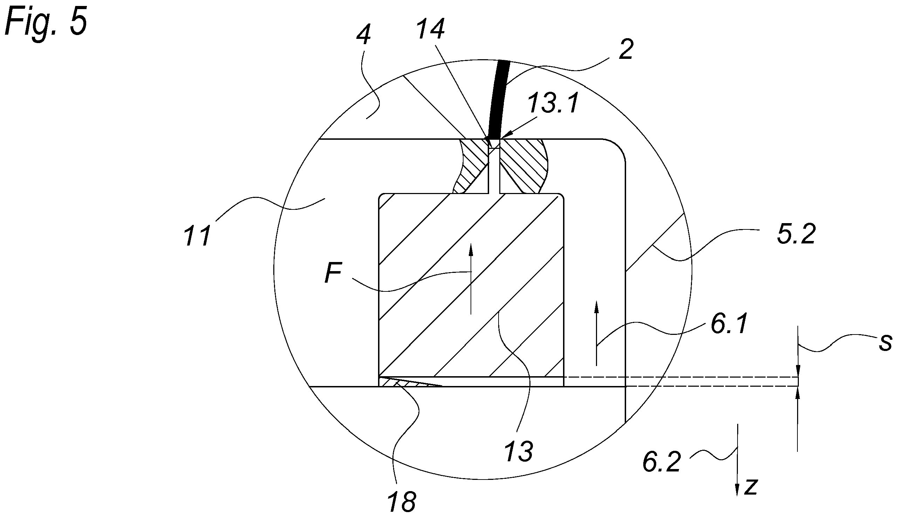

Nach den Figuren 1 bis 5 wird beispielsweise ein Mehrkomponenten-Spritzgießwerkzeug 1 zur Herstellung eines Spritzteils 2 nach der Drehtechnik - wie anhand der Drehrichtung 3 in Fig. 2 zu erkennen - hergestellt.

Bekanntermaßen weist ein Mehrkomponenten-Spritzgießwerkzeug 1 nach der Drehtechnik zwei auseinander und wieder zusammenfahrbare Formhälften 4, 5 auf, von denen die erste Formhälfte 4 stehend und die zweite Formhälfte 5 in Schließ- bzw. Öffnungsrichtung 6.1, 6.2 bzw. allgemein entlang der z-Achse - siehe Fig. 2 - beweglich gelagert ist, um das Mehrkomponenten-Spritzgießwerkzeug 1 zu schließen oder zu öffnen.

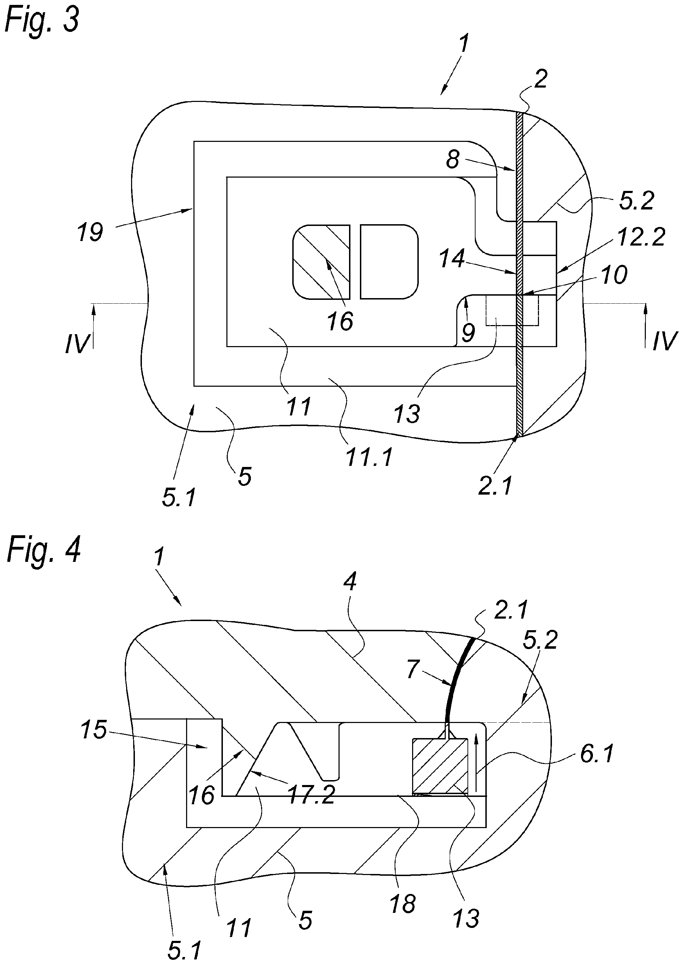

Zwischen den beiden Formhälften 4, 5 bilden sich zwei Formkavitäten 7, 8 aus. In die nach Fig. 1 dargestellten ersten Formkavität 7 wird eine erste Komponente aus Kunststoff eingespritzt, um ein Vorspritzteil 2.1 zu erzeugen. In die nach Fig. 3 dargestellten zweiten Formkavität 8 wird eine zweite Komponente aus Kunststoff eingespritzt, welche sich mit dem Vorspritzteil 2.1 verbindet und damit das Spritzteil 2 schafft. Das Vorspritzteil 2.1 wird hierzu durch eine Drehbewegung am Mehrkomponenten-Spritzgießwerkzeug 1 von der ersten Formkavität 7 zur zweiten Formkavität 8 hinbewegt.

Die zweite Formhälfte 5 weist einen, die erste Formkavität 7 begrenzenden Formeinsatz 9 auf, welcher am Vorspritzteil 2.1 eine formgenaue Stoßfläche 10 erzeugt.

Erfindungsgemäß wird nun das Vorspritzteil 2.1 über ein Drehtellerverfahren zur zweiten Formkavität 8 hinbewegt. Bekanntermaßen wird beim Drehtellerverfahren ein an der zweiten Formhälfte 5 drehbar gelagertes Drehteller 5.1 relativ zur ersten Formhälfte 4 gedreht. Zunächst wird die zweite Formhälfte 5 in Öffnungsrichtung 6.2 von der ersten Formhälfte 4 wegbewegt und dann das Drehteller 5.1 um die z-Achse - im Ausführungsbeispiel um 180° - gedreht, wodurch dann der Vorspritzteil 2.1 an die zweiten Formkavität 8 anschließt.

Damit nun der Formeinsatz 9 seine Funktion, die dieser bei der ersten Formkavität 7 ausübt, nicht an der zweiten Formkavität 8 ausübt, ist der Formeinsatz 9 als beweglicher Schieber 11 ausgebildet - wie dies im Vergleich der Fig. 1 und 3 zu erkennen ist.

So begrenzt der Schieber 11 in seiner ersten Lage 12.1 an der ersten Formkavität 7 diese Formkavität 7 zur Erzeugung der Stoßfläche 10 am Vorspritzteil 2.1, wohingegen der Schieber 11 in seiner zweiten Lage 12.2 an der zweiten Formkavität 8 diese zweiten Formkavität 8 zur Stoßfläche 10 am Vorspritzteil 2.1 hin erweitert. Aus diesem Grund kann auch die zweite Komponente an die Stoßfläche 10 des Vorspritzteils 2.1 anschließen, was aufgrund der formgenauen Stoßfläche 10 zu einem besonders belastbaren Spritzteil 2 führt. Der Schieber 11 ist durch eine Linearführung 11.1 am Drehteller 5.1 geführt.

Wie zudem der Figuren 1 und 2 zu entnehmen ist der Formeinsatz 9 quer zur Schließ- bzw. Öffnungsrichtung 6.1, 6.2 des Mehrkomponenten-Spritzgießwerkzeugs 1 beweglich gelagert - und zwar in x-Achse, nämlich in Richtung des Formkerns 5.2 des Drehtellers 5.1.

Zudem weist das Drehteller 5.1 ein verschiebbares Spannelement 13 auf. Dieses Spannelement 13 ist neben dem beweglichen Formeinsatz 9 angeordnet und schließt an diesen an. Durch Verlagerung des Spannelements 13 in Richtung des Vorspritzteils 2.1, nämlich in Schließrichtung 6.1, drückt die Anlagefläche 13.1 auf das Vorspritzteil 2.1, was dieses einspannt und auch gleichzeitig die zweite Formkavität 8 abgedichtet. Ein Überspritzen des Vorspritzteils 2.1 mit der zweiten Komponente kann daher in diesem Bereich standfest verhindert werden.

Auch sorgt der Formeinsatz 9 für einen besonders formgenauen Anschluss der zweiten Komponente, indem diese ein nutförmige Ausnehmung 14 aufweist, welche in der zweiten Lage 12.2 die zweite Formkavität 8 zur Stoßfläche 10 des Vorspritzteils 2.1 hin öffnet - dies in Fig. 3 erkennbar.

Gleichzeitiges Spritzen eines Vorspritzteils 2.1 und eines Spritzteils 2 kann am Mehrkomponenten-Spritzgießwerkzeug 1 erreicht werden, indem das Drehteller 5.1 zu jeder Formkavität 7, 8 je einen Formeinsatz 9 und je ein Spannelement 13 aufweist - was nicht dargestellt ist.

Zudem ist der Fig. 3 zu entnehmen, dass die zweite Formkavität 8 an das Vorspritzteil 2.1 in Längsrichtung L also in y-Achse des Mehrkomponenten-Spritzgießwerkzeugs 1 anschließt.

Erfindungsgemäß wird diese Bewegung des Formeinsatzes 9 von einem Keiltrieb 15 umgesetzt. Hierzu weist der Keiltrieb 15 einen Treiber 16 auf, der an der ersten Formhälfte 5 vorgesehen ist. Der Treiber 16 wirkt mit dem Schieber 11 des Formeneinsatzes 9 zusammen, und zwar über miteinander korrespondierende zweite Führungsflächen 17.2. So ist in Fig. 4 zu entnehmen, dass bei geschlossenem Mehrkomponenten-Spritzgießwerkzeug 1 der Treiber 16 den Schieber 11 in seine zweite Lage 12.2 bewegt.

Der Treiber 16 bewegt aber nicht nur den Schieber 11 in die zweite Lage 12.2, der Treiber 16 bewegt auch mit ersten miteinander korrespondierenden Führungsflächen 17.1 den Schieber 11 in die erste Lage 12.1 - wie in Fig. 2 zu erkennen.

Zudem bewegt auch der Keiltrieb 15 das Spannelement 13 - und zwar über den Schieber 11, der eine Keil 18 unter das Spannelement 13 treibt und damit dessen Bewegung der Länge s entlang der x-Achse in y-Achse umlenkt, um eine Spannkraft F zu erzeugen - wie in Fig. 4a im Detail zu erkennen.

Zudem sind Formeinsatz 9 und Spannelement 13 zu einer Baugruppe 19 an dem Drehteller 5.1 zusammengefasst, was die Konstruktion vereinfacht.

## Patentansprüche

1. Mehrkomponenten-Spritzgießwerkzeug zur Herstellung eines Spritzteils (2), mit wenigstens zwei auseinander und wieder zusammenfahrbaren Formhälften (4, 5), von denen eine erste Formhälfte (4) stehend und eine zweite Formhälfte (5) beweglich ist, und mit zumindest zwei, sich zwischen den Formhälften (4, 5) ausbildenden Formkavitäten (7, 8), wovon eine erste Formkavität (7) zum Formen eines Vorspritzteils (2.1) aus einer ersten Komponente und eine zweite Formkavität (8) zum Formen des Spritzteils (2), umfassend das Vorspritzteil (2.1) und eine zweite Komponente, ausgebildet sind, wobei die zweite Formhälfte (5) einen die erste Formkavität (7) begrenzenden Formeinsatz (9) zur Erzeugung einer Stoßfläche (10) am Vorspritzteil (2.1) aufweist, **dadurch gekennzeichnet, dass** die zweite Formhälfte (5) ein Drehteller (5.1) mit dem Formeneinsatz (9) aufweist und dass der Formeinsatz (9) als beweglicher Schieber (11) ausgebildet ist, um in seiner ersten Lage (12.1) an der ersten Formkavität (7) diese zur Erzeugung einer Stoßfläche (10) am Vorspritzteil (2.1) zu begrenzen und in seiner zweiten Lage (12.2) an der zweiten Formkavität (8) diese zur Stoßfläche (10) am Vorspritzteil (2.1) hin zu erweitern.

2. Mehrkomponenten-Spritzgießwerkzeug nach Anspruch 1, **dadurch gekennzeichnet, dass** der Formeinsatz (9) quer zur Schließ- bzw. Öffnungsrichtung (6.1 bzw. 6.2) des Mehrkomponenten-Spritzgießwerkzeugs (1) beweglich gelagert ist.

3. Mehrkomponenten-Spritzgießwerkzeug nach Anspruch 1 oder 2, **dadurch gekennzeichnet, dass** das Drehteller (5.1) ein verschiebbares Spannelement (13) aufweist, welches beim dem beweglichen Formeinsatz (9) angeordnet und in Richtung des Vorspritzteils (2.1) zu dessen Einspannung verlagerbar ausgebildet ist.

4. Mehrkomponenten-Spritzgießwerkzeug nach Anspruch 3, **dadurch gekennzeichnet, dass** das Spannelement (13) in Schließrichtung (6.1) des Mehrkomponenten-Spritzgießwerkzeugs (1) beweglich gelagert ist.

5. Mehrkomponenten-Spritzgießwerkzeug nach einem der Ansprüche 1 bis 4, **dadurch gekennzeichnet, dass** der Formeinsatz (9) eine Ausnehmung (14) aufweist, die in der zweiten Lage (12.2) die zweite Formkavität (8) zur Stoßfläche (10) des Vorspritzteils (2.1) hin öffnet.

6. Mehrkomponenten-Spritzgießwerkzeug nach einem der Ansprüche 1 bis 5, **dadurch gekennzeichnet, dass** das Drehteller (5.1) zu jeder Formkavität (7, 8) je mindestens einen Formeinsatz (9) und gegebenenfalls je mindestens ein Spannelement (13) aufweist.

7. Mehrkomponenten-Spritzgießwerkzeug nach einem der Ansprüche 1 bis 6, **dadurch gekennzeichnet, dass** die zweite Formkavität (8) an das Vorspritzteil (2.1) in Längsrichtung (L) anschließt.

8. Mehrkomponenten-Spritzgießwerkzeug nach einem der Ansprüche 3 bis 7, **dadurch gekennzeichnet, dass** Formeinsatz (9) und Spannelement (13) zu einer Baugruppe (19) an dem Drehteller (5.1) zusammengefasst sind.

9. Mehrkomponenten-Spritzgießwerkzeug nach einem der Ansprüche 1 bis 8, **dadurch gekennzeichnet, dass** das Mehrkomponenten-Spritzgießwerkzeug einen Keiltrieb (15) aufweist, der einen an der ersten Formhälfte (4) befestigten Treiber (16) aufweist, welcher Treiber (16) mit dem Schieber (11) zu dessen Bewegung in die erste Lage (12.1) und/oder in die zweite Lage (12.2) zusammenwirkt.

10. Mehrkomponenten-Spritzgießwerkzeug nach Anspruch 9, **dadurch gekennzeichnet, dass** der Keiltrieb (15) das Spannelement (13) mithilfe des Schiebers (11) mit bewegt.

11. Mehrkomponenten-Spritzgießwerkzeug nach einem der Ansprüche 1 bis 10, **dadurch gekennzeichnet, dass** das Drehteller (5.1) einen Formkern (5.2) aufweist.

## Claims

1. Multicomponent injection molding tool for producing an injection-molded part (2), comprising at least two mold halves (4, 5) which can be moved apart from one another and together again, of which a first mold half (4) is stationary and a second mold half (5) is movable, and comprising at least two mold cavities (7, 8) which are formed between the mold halves (4, 5), of which a first mold cavity (7) is for molding a pre-molded part (2.1) from a first component and a second mold cavity (8) for molding the injection-molded part (2), comprising the pre-molded part (2. 1) and a second component, wherein the second mold half (5) comprises a mold insert (9) bounding the first mold cavity (7) for producing an abutment surface (10) on the pre-molded part (2.1), **characterized in that** the second mold half (5) comprises a turntable (5.1) with the mold insert (9), and **in that** the mold insert (9) is designed as a movable slide (11) in order, in its first position (12.1) on the first mold cavity (7), to limit the latter in order to produce an abutment surface (10) on the pre-molded part (2.1) and, in its second position (12.2) on the second mold cavity (8), to widen the latter towards the abutment surface (10) on the pre-molded part (2.1).

2. Multicomponent injection molding tool according to claim 1, **characterized in that** the mold insert (9) is movably mounted transversely to the closing or opening direction (6.1 or 6.2) of the multicomponent injection molding tool (1).

3. Multicomponent injection molding tool according to claim 1 or 2, **characterized in that** the turntable (5.1) has a displaceable clamping element (13) which is arranged at the movable mold insert (9) and is designed to be displaceable in the direction of the pre-molded part (2.1) for clamping thereof.

4. Multicomponent injection molding tool according to claim 3, **characterized in that** the clamping element (13) is movably mounted in the closing direction (6.1) of the multicomponent injection molding tool (1).

5. Multicomponent injection molding tool according to one of claims 1 to 4, **characterized in that** the mold insert (9) has a recess (14) which, in the second position (12.2), opens the second mold cavity (8) toward the abutment surface (10) of the pre-molded part (2.1).

6. Multicomponent injection molding tool according to one of claims 1 to 5, **characterized in that** the turntable (5.1) has at least one mold insert (9) for each mold cavity (7, 8) and optionally at least one clamping element (13) for each mold cavity (7, 8).

7. Multicomponent injection molding tool according to one of claims 1 to 6, **characterized in that** the second mold cavity (8) adjoins the pre-molded part (2.1) in the longitudinal direction (L).

8. Multicomponent injection molding tool according to one of claims 3 to 7, **characterized in that** mold insert (9) and clamping element (13) are combined to form an assembly (19) on the turntable (5.1).

9. Multicomponent injection molding tool according to one of claims 1 to 8, **characterized in that** the multicomponent injection molding tool has a wedge drive (15) which has a driver (16) attached to the first mold half (4), which driver (16) interacts with the slide (11) to move it into the first position (12.1) and/or into the second position (12.2).

10. Multicomponent injection molding tool according to claim 9, **characterized in that** the wedge drive (15) moves the clamping element (13) with the aid of the slide (11).

11. Multicomponent injection molding tool according to one of claims 1 to 10, **characterized in that** the turntable (5.1) has a mold core (5.2).

## Revendications

1. Outil de moulage par injection multicomposant pour la fabrication d'une pièce moulée par injection (2), avec au moins deux moitiés de moule (4, 5) pouvant être écartées et rapprochées, une première moitié de moule (4) étant stationnaire et une deuxième moitié de moule (5) étant mobile, et avec au moins deux cavités de moule (7, 8) formées entre les moitiés de moule (4, 5), dont une première cavité de moule (7) pour mouler une ébauche de pièce moulée par injection (2.1) à partir d'un premier composant et une deuxième cavité de moule (8) pour le moulage de la pièce moulée par injection (2), contenant l'ébauche de pièce moulée par injection (2.1) et un deuxième composant, dans lequel la deuxième moitié de moule (5) présente un insert de moule (9) délimitant la première cavité de moule (7) pour produire une surface d'aboutement (10) sur l'ébauche de pièce moulée par injection (2.1), **caractérisé en ce que** la deuxième moitié de moule (5) présente un plateau tournant (5.1) avec l'insert de moule (9) et **en ce que** l'insert de moule (9) est conformé comme une coulisse mobile (11) pour, dans une première position (12.1) sur la première cavité de moule (7), délimiter celle-ci afin de produire une surface d'aboutement (10) sur l'ébauche de pièce moulée par injection (2.1) et, dans une deuxième position (12.2) sur la deuxième cavité de moule (8), élargir celle-ci vers la surface d'aboutement (10) de l'ébauche de pièce moulée par injection (2.1).

2. Outil de moulage par injection multicomposant selon la revendication 1, **caractérisé en ce que** l'insert de moule (9) est supporté de façon mobile transversalement par rapport au sens d'ouverture ou de fermeture (6.1 ou 6.2) de l'outil de moulage par injection multicomposant (1).

3. Outil de moulage par injection multicomposant selon la revendication 1 ou 2, **caractérisé en ce que** le plateau tournant (5.1) présente un élément de serrage coulissant (13) qui est disposé au niveau de l'insert de moule (9) mobile et peut être déplacé vers l'ébauche de pièce moulée par injection (2.1) pour serrer celle-ci.

4. Outil de moulage par injection multicomposant selon la revendication 3, **caractérisé en ce que** l'élément de serrage (13) est supporté avec possibilité de déplacement dans le sens de fermeture (6.1) de l'outil de moulage par injection multicomposant (1).

5. Outil de moulage par injection multicomposant selon l'une des revendications 1 à 4, **caractérisé en ce que** l'insert de moule (9) présente un évidement (14) qui ouvre la deuxième cavité de moule (8) vers la surface d'aboutement (10) de l'ébauche de pièce moulée par injection (2.1) dans la deuxième position (12.2).

6. Outil de moulage par injection multicomposant selon l'une des revendications 1 à 5, **caractérisé en ce que** le plateau tournant (5.1) présente pour chaque cavité de moule (7, 8) au moins un insert de moule (9) et éventuellement au moins un élément de serrage (13).

7. Outil de moulage par injection multicomposant selon l'une des revendications 1 à 6, **caractérisé en ce que** la deuxième cavité de moule (8) se raccorde à l'ébauche de pièce moulée par injection (2.1) dans le sens longitudinal (L).

8. Outil de moulage par injection multicomposant selon l'une des revendications 3 à 7, **caractérisé en ce que** l'insert de moule (9) et l'élément de serrage (13) sont réunis pour former un sous-groupe (19) sur le plateau tournant (5. 1).

9. Outil de moulage par injection multicomposant selon l'une des revendications 1 à 8, **caractérisé en ce que** l'outil de moulage par injection multicomposant présente un entraîneur en coin (15) qui présente un élément d'entraînement (16) fixé sur la première moitié de moule (4), lequel élément d'entraînement (16) coopère avec la coulisse (11) pour déplacer celle-ci dans la première position (12.1) et/ou dans la deuxième position (12.2).

10. Outil de moulage par injection multicomposant selon la revendication 9, **caractérisé en ce que** l'actionneur à clavettes (15) entraîne l'élément de serrage (13) à l'aide de la coulisse (11).

11. Outil de moulage par injection multicomposant selon l'une des revendications 1 à 10, **caractérisé en ce que** le plateau tournant (5.1) présente un noyau de moule (5.2).
